(19) Europäisches Patentamt

European Patent Office

Office européen des brevets

(11) **EP 4 756 379 A1**

(12) **EUROPEAN PATENT APPLICATION**

(43) Date of publication:
**10.06.2026 Bulletin 2026/24**

(21) Application number: **24217388.8**

(22) Date of filing: **04.12.2024**

(51) International Patent Classification (IPC):
**G01C 21/32** (2006.01)    **G01C 21/00** (2006.01)
**G06T 7/33** (2017.01)    **G06V 10/75** (2022.01)
**G06V 20/58** (2022.01)

(52) Cooperative Patent Classification (CPC):
**G01C 21/3841; G01C 21/32; G06T 7/33;
G06V 10/757; G06V 20/586**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **VOLKSWAGEN AG**
**38440 Wolfsburg (DE)**

(72) Inventors:
• **Wappler, Stefan**
**38440 Wolfsburg (DE)**
• **Mendoza, Ricardo Carillo**
**38440 Wolfsburg (DE)**

(54) **METHOD FOR ALIGNING A PLURALITY OF SINGLE DRIVE MAPS**

(57)    The invention discloses a Method for aligning a plurality of single drive maps (SDM1, SDM2), each single drive map (SDM1, SDM2) containing a plurality of data objects (6) associated with corresponding fixed objects (4) of a bordered traffic area (1), said data objects (6) being based on a data collection by a respective vehicle (mv1, mv2) when driving through said bordered traffic area (1), wherein for a first single drive map (SDM1), based on its respective data objects (6), a first set of first key points ($p_j$) is determined, each key point being ($p_j$, $q_j$) indicative of a data object (6), by means of a key point determination algorithm (8), and for each first key point ($p_j$), a feature descriptor (fd) indicative of the surroundings of the respective first key point ($p_j$) is determined by means of a feature determination algorithm (10), wherein for a second single drive map (SDM2), based on its respective data objects (6), a second set of second key points ($q_j$) is determined by means of said key point determination algorithm (8), and for each second key point ($q_j$), a feature descriptor (fd) indicative of the surroundings of the respective second key point ($q_j$) is determined by means of said feature determination algorithm (10), wherein for each of the first key points ($p_j$), a corresponding second key point ($q_{c(j)}$) is determined based on the respective feature descriptors (fd) of said first and second key points ($p_j$, $q_j$), wherein a rigid transform (**R, t**) for mapping the second single drive map (SDM2) is derived, said rigid transform (**R, t**) being determined on the basis of said correspondence (c(j)) of the first key points ($p_j$) and the respective second key points ($q_{c(j)}$).

Fig. 2

**Description**

The invention is related to a method for aligning a plurality of single drive maps, each single drive map containing a plurality of data objects associated with corresponding fixed objects of a bordered traffic area, said data objects being based on a data collection by a respective vehicle when driving through said bordered traffic area.

Motor vehicles are increasingly equipped with driver assistance systems (DAS) for a variety of specific driving situations, ranging from warning systems such as lane departure warning systems to so-called advanced DAS such as adaptive cruise control or intelligent parking assist systems, among others. A common denominator of these DAS is the acquisition of spatial information about the surroundings of a motor vehicle at a given point in time by means of a number of environment sensors, and an evaluation of the data gathered by said environment sensors in order to assess the specific driving situation regarding relevant objects for the particular DAS. The environment sensors typically are given by Radar-based and/or Lidar-based sensors, and/or cameras or similar optical sensors.

In the increasing autonomy levels of DAS, the motor vehicles are operated with increasing degrees of automatization of more and more driving functions. One major goal is to achieve the so-called "Level 5" corresponding to a fully automatic driving operation in a specific traffic situation and/or traffic area without any need of driver supervision or even attention. To this end, very detailed geographical (and geometrical) information, i.e., driving maps, are required for said automatic operation. While such information can be easily obtained by the use of satellite image data for most roads and streets, opening the possibility to automatically navigate a motor vehicle along a virtual map corresponding to such a satellite image by means of GPS and said optical sensors (the latter ensuring lane keeping etc.), this information is typically not available for indoor spaces such as indoor parking lots. However, the process of parking a motor vehicle is one very prominent objective of current developments in the field, as the entire parking process with its standardized motions and the typical low speeds and few moving vehicles on a parking lot appear among the most promising driving processes for reaching full autonomy, i.e., Level 5, without any compromise on the safety.

To this end, one possible approach might be to derive a map from a parking lot (in particular, an indoor parking lot) from the sensor data of a multitude of motor vehicles driving through said parking lot, e.g., by generating so-called single drive maps (SDM) from each drive of a motor vehicle through at least a portion of the parking lot, said SDM containing relevant object of the parking lot such as walls or poles, and joining these SDMs together in order to have more robust information on these objects, as well as to fill blank spaces where no motor vehicle has been driving yet, and thus, no sensor data at all exists.

One of the challenges of this approach is the proper alignment of the different SDMs generated by different motor vehicles. As in indoor parking lots, typical GPS systems for positioning the respective motor vehicle with respect to a reference frame (in order to align the motor vehicle's SDM using the reference frame) normally stop working at a certain point. Thus, the information for linking collected sensor and image data to the reference frame is lost. However, this loss is independent for different motor vehicles. Similar problems may arise in other bordered traffic areas whenever a GPS signal or the like are disturbed by the surroundings (e.g., large metal objects close to the bordered traffic area).

It is therefore an object of the invention to provide a method for aligning a plurality of single drive maps each of which representing at least a part of the same bordered traffic area without the need for an external reference frame given by a GPS signal or the like.

According to the invention, this objective is achieved by a method for aligning a plurality of single drive maps, each single drive map containing a plurality of data objects associated with corresponding fixed objects of a bordered traffic area, said data objects being based on a data collection by a respective vehicle when driving through said bordered traffic area, wherein for a first single drive map, based on its respective data objects, a first set of first key points is determined, each key point being indicative of a data object, by means of a key point determination algorithm, and for each first key point, a feature descriptor indicative of the surroundings of the respective first key point is determined by means of a feature determination algorithm, wherein for a second single drive map, based on its respective data objects, a second set of second key points is determined by means of said key point determination algorithm, and for each second key point, a feature descriptor indicative of the surroundings of the respective second key point is determined by means of said feature determination algorithm.

According to said method, for each of the first key points, a corresponding second key point is determined based on the respective feature descriptors of said first and second key points, wherein a rigid transform for mapping the second single drive map is derived, said rigid transform being determined on the basis of said correspondence of the first key points and the respective second key points. Embodiments of particular advantage, and which may be inventive in their own right, are given in the dependent claims and in the following description.

The notion of a bordered traffic area in particular comprises any traffic area, i.e., an area configured and designed to host the traffic of motor vehicles (e.g., by pavement and possibly further preparations and/or installation) that has a physical border with respect to its surroundings, or that by design can be restricted to a space within virtual boundaries. In particular, a bordered traffic area may be given by a parking lot.

The notion of a single drive map (SDM) comprises a map that has been generated by using sensors of a motor vehicle , that has been driving through said bordered traffic area, preferably during one continuous drive of said motor vehicle through the bordered traffic area, i.e., when the same motor vehicle passes through said bordered traffic area on different occasions, preferably, a new SDM is generated each time. The SDM single map contains a plurality of data objects, said data objects preferably comprising positioning information on fixed, i.e., non-moving physical objects such as walls and poles, and preferably on non-moving virtual objects such as parking slots (and/or their respective delimitations). The positioning information may be given as a relative positioning information, obtained via odometry data of the motor vehicle while driving through the bordered traffic area. In particular, said relative positioning information may be given without any direct link to any reference frame, e.g., given by GPS or similar absolute positioning data. In summary, the data objects correspond to said fixed physical and/or virtual objects in the bordered traffic area (such as walls, poles or parking slots), and preferably comprise relative positioning information on these fixed objects.

The SDM is preferably generated from a data collection during said drive-through of a motor vehicle in the bordered traffic area. The data collection preferably comprises collecting positioning information data on said fixed objects by means of a number of radar sensors and/or a number of lidar sensors and/or a number of cameras of the respective motor vehicle, and further comprises a corresponding evaluation of the collected sensor data with respect to a relative position and/or a relative distance to the motor vehicle. In particular, the SDM may be a pre-classified map in the sense that it comprises information on the specific type of a fixed object related to a data object (e.g., whether it is a pole or a wall), and/or in that is has interpolated data on inferred boundaries of the fixed objects, i.e., that possibly sparse or otherwise incomplete data on a specific fixed object is interpolated to have the entire extension of the fixed object covered in the corresponding data object. In other words, if a data collection from a wall gives only a set of discontinuous radar points, the data object in the SDM corresponding to this wall preferably displays the entire wall (and has the full positioning information, inferred from said radar points via said pre-classification).

In particular, the SDM can be given as an image containing a multitude of pixels such that a pixel (i.e., a data point in the SDM) corresponds to a spatial area in the bordered traffic area, and the information on a data object is encoded pixel-wise in the SDM by a respective binary information or a probability on the presence of a data object in the grid cell ("occupation information").

By means of a key point detection algorithm a first set of first key points $\{\mathbf{p}_j\}_{j=1}^{Np}$ is determined from a first SDM, and a second set of second key points $\{\mathbf{q}_j\}_{j=1}^{Nq}$ is determined from a second SDM. Said key point detection algorithm is configured and designed to determine key points of data objects of an SDM in a way that a key point is indicative of its corresponding data object. Preferably, such a key point may be given by a point of a change of a shape of the underlying data object, e.g., by point close to a corner or by a point close to a limitation of a data object. In particular, each data object may have more than one key point.

Preferably, the key point detection algorithm is configured to detect data points indicative of a shape change of the corresponding data object, e.g., by comparing a set of surrounding pixels of a given pixel (i.e., a data point) with respect to their occupation information and searching for a spatial change in the respective occupation information.

Preferably, the key point detection algorithm may be configured to tolerate the generation of key points at data points (or corresponding pixels) where no shape change of the underlying data object is occurring, as long as points where such a change does occur are detected as key point with sufficiently high reliability (i.e., the key point detection algorithm may tolerate false positives for minimizing false negatives).

By means of a feature determination algorithm, for every first and second key point $\mathbf{p}_j$, $\mathbf{q}_j$, a corresponding feature descriptor fd($\mathbf{p}_j$), fd($\mathbf{q}_j$) is determined. Said feature determination algorithm is configured and designed to determine a feature descriptor of a key point of an SDM in a way that the feature descriptor is indicative of its surroundings, and in particular, not only indicative of possible shape changes in an immediate environment (i.e., in the environment of the directly next pixels or the next-to-next-pixels), but also indicative of the overall size and/or shape of the entire data object and possibly of adjacent data objects.

Preferably, to this end, the feature determination algorithm takes into account a larger environment around a specific data point (or around a specific pixel), previously identified as a key point, than the environment taken into account by the key point determination algorithm for identifying a specific data point (or around a specific pixel) as a key point. In particular, this means that the process step of identifying a (first or second) key point and the process step of determining a feature descriptor for a given key point are distinct from each other, and that preferably, the key point determination algorithm and the feature determination algorithm are at least using different parameters (in particular, for the size of the respective environment, c.f. above) and are preferably different from each other.

The feature descriptor is indicative of the surroundings of a given key point in the sense that a set of numbers and/or a vector of numbers is assigned to a key point in dependence of its ("broader", c.f. above) surroundings, and that morphologically similar surroundings generate similar numbers in the set or in the vector entries (e.g., there should be a smooth or quasi-smooth transition in the feature descriptor's numbers when taking away data points from a key point's object close to said key point, or when adding data points close to a key point), while surroundings which clearly are morphologically different generate very different numbers in the respective sets or in vector entries. Thus, the feature descriptor is configured and designed to be a sort of finger print or identifier of a specific set of morphological shapes in the surroundings.

From this numeric identifier of the "broader" surroundings, given in the feature descriptor of a first key point $p_j$, a corresponding second key point $q_{c(j)}$ can be determined from its own feature descriptor, i.e., from its own numeric (and possibly vector-valued) identifier. Preferably, to this end, a similarity relation for a pair of feature descriptors of two respective key points is established (e.g., by means of a Euclidean distance or a comparison of vector entries), and the second key point to a given first key point is taken as the second key point which has the feature descriptor that is "most similar" to the feature descriptor of the given first key point, i.e.,

$$\text{(i)} \qquad q_{c(j)} = \arg\min_{q_k} \| \text{fd}(p_j) - \text{fd}(q_k) \|^2,$$

for the Euclidian distance as similarity measure of choice. Note that the Euclidean distance here is defined with respect to the two feature descriptors, which, in general, are high-dimensional vectors representing local information on the surroundings of a key point such as image gradients, possibly in several different levels of image filtering.

From this correspondence c(j) of the first key points $p_j$ with the respective second key points $q_{c(j)}$, said correspondence c(j) being established from their respective feature descriptors, a rigid transform for mapping the second drive map is derived, i.e., a rigid transform comprising a rotation $R$ and a translation $t$ mapping each data point of the second SDM onto a corresponding mapped data point, preserving all distance relations between any two data points of the second SDM. Preferably, said rigid transform is derived as an optimal rigid transform with respect to an optimization of a cost function such as a distance measure between certain data points of the first SDM and the corresponding mapped data points of the (mapped) second SDM. In another preferred alternative, said rigid transform is derived as an optimal rigid transform with respect to an overlap measure or yet another optimality criterion.

One major advantage of the presented method for aligning SDMs is that the method does not require any information on absolute positions of the fixed objects represented in the SDMs, but achieves an alignment exclusively based on morphological similarities of the data objects contained in the SDMs (and representing said fixed objects of the underlying bordered traffic area). Furthermore, the separation of determining key points in each SDM from assigning respective feature descriptors to each key point allows for employing the most efficient and/or precise algorithm for each of the two sub-processes, whilst when determining key points via algorithms which also directly assign a feature descriptor during determination of a key point, this optimal efficiency or precision cannot be necessarily ensured.

For a set of more than two SDMs, a third, fourth etc. SDM may be aligned to the first SDM using the process described above.

In an embodiment, said rigid transform is determined such that the number of second key points $q_{c(j)}$ being mapped (at least, up to a minimal $\varepsilon$-environment) onto their corresponding first key points $p_j$ is maximized. While an optimization for deriving the optimal rigid transform $R, t$ (with a rotation $R$ and a translation $t$) may also be performed with respect to other cost functions (e.g., mean square error) or optimality measures, maximizing the number of properly transformed second key points $q_{c(j)}$ in this specific case has the additional advantage that the key points have already been singled out by the key point determination algorithm as points of major importance. While an optimality measure taking into account all possible (square) distances $\| R \cdot q_{c(j)} + t - p_j \|^2$ may also lead to satisfactory results, priorizing the proper transformation of a maximal <u>number</u> of second key points $q_{c(j)}$ may further help to discard possible outliers or badly identified / badly corresponded key points, and thus makes the process more robust. In particular, this can be achieved by means of calculating the centroid for each of the first and second key points $p_j, q_{c(j)}$, and by deriving a rigid transform that brings the centroids into overlap (possibly, using a least squares method and a Gram-Schmidt orthogonalization).

In an embodiment, said rigid transform is determined such that a sum of Euclidean norms $\| R \cdot q_{c(j)} + t - p_j \|^2$ between the first key points $p_j$ and the corresponding transformed second key points $R \cdot q_{c(j)} + t$ is minimized. This minimization process can be performed with particular computational efficiency.

In an embodiment, a parking lot, and in particular an indoor parking lot, is taken as said bordered traffic area. While the proposed method generally has advantages for any type of bordered traffic area where absolute positioning data might be distorted, might fail or not be available, this can in particular be the case for parking lots, e.g. between buildings where the resolution of the positioning of a motor vehicle might be slightly distorted (leading to slightly distorted and thus more difficult-to-align SDMs) and specifically indoor parking lots, where a GPS signal is normally not even available.

In another advantageous embodiment, at least the first SDM and the second SDM are given as or converted into respective first and second images corresponding to respective grid maps prior to determining the respective first and second key points, wherein each image contains a multitude of pixels corresponding to respective regular grid cells representing a spatial area of the bordered traffic area, each pixel containing information about a presence of a fixed object in the corresponding spatial area of the bordered traffic area (i.e., the corresponding occupation information). This comprises, in particular, that the first and/or the second SDM may be derived from any sort of two-dimensional data (e.g., a point cloud or pre-classified vector object data) by conversion into respective first and second images, with the pixels of the first and second image containing the respective occupation information as described above. Likewise, the first and/or second SDM may be given as any sort of two-dimensional data (c.f. above), and prior to the determination of the first and second key points, the first and/or second SDM is converted into the corresponding first/second image with the above-mentioned properties.

In particular, at least for a number of images, said information about a presence of a fixed object in the corresponding spatial area of the bordered traffic area (i.e., the occupation information) is provided as a probability value. While the occupation information typically can be given as a binary value (i.e., the pixel either forms part or does not form part of a data object of the underlying SDM), the use of "soft" probability values, i.e., which also may attain values larger than zero and smaller than one, may account for uncertainties in the determination of the data objects, and in particular, of their spatial limitations (such that the surface of a wall as fixed object may be "smoothed out" over various pixels with a probability gradient over said pixels for the corresponding data object).

In yet another embodiment, said key point determination algorithm determines a specific pixel as a key point (first or second, depending on the respective SDM) on the basis of a first window of pixels surrounding said specific pixel, said first window having a predetermined first window size. This comprises in particular that for any pixel px(i, k) of the first SDM (an analogous reasoning holds for the pixels of the second SDM), wherein j and k are respective row and column indices, a fixed ("first") window around px(i, k) of a first window size (say, n pixels in each direction, i.e., 2n+1 pixels in each dimension) is taken into account, i.e., the window has the corners px(i-n, k-n), px(i+n, k-n), px(i-n, k+n), px(i+n, k+n). Preferably, the occupation information of the pixels of the first window surrounding the given pixel px(i, k) is taken into account for determining a characteristic value indicative of whether the given pixel px(i, k) may be a key point (possibly, in comparison with characteristic values of other pixels), and most preferably, for a given pixel px(i, k), no information from any pixel outside its first window is taken into account for determining such a characteristic value. Said characteristic value may in particular be given by a value of a filter function (e.g., a Gaussian kernel or similar) calculated over the first window, preferably by means of a convolution.

In particular, the key point determination algorithm may determine a specific pixel as a key point on the basis of a set of first windows of pixels surrounding said specific pixel, said set of first windows having different first window sizes.

It is of further advantage if said key point determination algorithm determines said specific pixel as said (respective first or second) key point on the basis of a contrast and/or an intensity of the respective pixels in said first window of pixels surrounding said specific pixel. This means: For the first SDM, a specific "given" pixel px(i, k) is determined as a first key point $\mathbf{p}_j$ on the basis of either the contrast or the intensity (or, in particular in the case of binary pixels, an intensity gradient) or both of the contrast and the intensity (or an intensity gradient) of the pixels px(a, b), a=i-n... i+n, b=k-n... k+n forming the first window surrounding the pixel px(i, k) under consideration (an analogous reasoning holds for the pixels of the second SDM regarding the second key points $\mathbf{q}_j$). In particular, the "contrast" of a given pixel px(i, k) may be taken with respect to the pixels directly adjacent to and/or directly surrounding the given pixel px(i, k). The intensity gradient at said specific pixel px(i,k), in particular, may be calculated from intensities of the pixels px (a,b), a=i-n... i+n, b=k-n... k+n of said first window surrounding said specific pixel px(i,k)..

In a particular embodiment, said key point determination algorithm may determine said specific pixel as said (respective first or second) key point on the basis of said contrast and/or intensity or an intensity gradient of the respective pixels in said set of first windows of pixels surrounding said specific pixel with said different first window sizes.

In a preferred embodiment, a KAZE algorithm is used as said key point determination algorithm for determining the first and second key points. The KAZE algorithm uses a set of recursively defined filtered versions of the image, wherein a filter parameter characterizing a "blur" of the image is defined as a time variable, and the recursion equation for defining the image $L_j$ at each recursion/time step $t_j$ is given as a numerical solution of the non-linear diffusion equation

$$\text{(ii)} \qquad \partial_t L = \text{div} \left( c(L, \ldots) \cdot \nabla L \right)$$

for the exact image L, wherein $\partial_t$ denotes the partial derivative of the image L with respect to the time t (i.e., with respect to the blur parameter), div denotes the divergence, $\nabla$L denotes the gradient of the image L and c(L, ...) denotes the diffusion coefficient, and may itself depend on the "density" which is diffusing, i.e., on the image L and/or on its gradient $\nabla$L (and may possibly depend on further variables). Depending on the particular shape of c, i.e., on the particular dependence on $\nabla$L, the numerical solution of (ii) may take different forms, and thus, also the "scale space" of the recursively defined images $L_j$ at each "time step" $t_j$ (each step of increasing blurring of the image L). The key points can then be determined from the spatial extrema of the different images $L_j$ of the scale space, and over different "scalings" (corresponding to images at different time steps $t_j$).

It is of particular advantage if said feature determination algorithm determines a feature descriptor to a given first or second key point on the basis of a second window of pixels surrounding the specific pixel corresponding to said first or second key point, said second window having a predetermined second window size. The feature descriptor of a first or second key point in particular is to be understood as a unique identifier of the key point that is invariant under rigid transforms, and preferably also under mere linear scaling operations. The considerations about the first window, as explained above in the context of the key point determination algorithm, may be transferred to the second window and the feature determination algorithm, mutatis mutandis.

In particular, the feature determination algorithm may determine a feature descriptor for a given key point on the basis of a set of second windows of pixels surrounding said key point, said set of second windows having different second window sizes.

In an embodiment, said feature determination algorithm determines said feature descriptor to said first or second key point on the basis of an image gradient of the respective pixels in said second window of pixels surrounding the specific pixel corresponding to said first or second key point. To this end, in particular, the image of the first or second SDM may be filtered with a filter function (e.g., a Gaussian kernel or similar) calculated over the first window, preferably by means of a convolution, or in case of a set of second windows, with a set of filter functions (e.g., Gaussian kernels with different widths) calculated over a set of second windows of different second window sizes..

Preferably, a SIFT algorithm is used as said feature determination algorithm. The SIFT algorithm uses a set of filtered versions $L_j$ of the image L, wherein the filtering is performed by respective convolutions with Gaussian kernels of different widths $\sigma_j$, forming thus the scale space. Taking the difference of two "adjacent" images $L_{j+1}$ - $L_j$ in scale space, a so-called "difference of Gaussians" is derived for the images $L_j$. In order to derive a descriptor of a given point (e.g., a key point), the gradient magnitude and orientation of the difference of Gaussians are evaluated in a discrete set of possible directions around this point (e.g., binning the angular range of 360° around the point into 36 bins of 10° width each), and the descriptor may then be derived from the magnitude-weighted orientations of the gradient field around the given point.

The SIFT algorithm is invariant under rigid transforms, and thus the determined feature descriptors depend only on the morphological properties of the underlying image. Furthermore, the SIFT algorithm can be performed with particular efficiency for a small set of given points (i.e., when the key points are already known).

In an embodiment, said rigid transform is determined based on a singular value decomposition method, using a first matrix of the first key points and a second matrix of the second key points in said singular value decomposition method. While an optimal rigid transform may also be obtained using quaternions, the singular value decomposition method is of particular advantage in the present case, as it is robust, easy to implement on an algebraic level, and has a high degree of conceptual clarity.

For minimizing the sum of the Euclidean norms $\| \mathbf{R} \cdot \mathbf{q}_{c(j)} + \mathbf{t} - \mathbf{p}_j \|^2$ between the first key points $\mathbf{p}_j$ and the corresponding transformed second key points $\mathbf{R} \cdot \mathbf{q}_{c(j)} + \mathbf{t}$ (i.e., the sum of their squared distances), the rotation $\mathbf{R}$ and the translation t may be minimized independently from each other. The minimization of the rotation $\mathbf{R}$ corresponds to finding the maximal $\mathbf{R}$ to the matrix

$$(iii) \qquad \mathrm{Tr}\{ \mathbf{R\,Q\,P^T}\} \text{ with } \mathbf{Q} = \Sigma_j\, \mathbf{q}_{c(j)}\, \mathbf{q}_{c(j)}{}^T \text{ and } \mathbf{P} = \Sigma_j\, \mathbf{p}_j\, \mathbf{p}_j{}^T,$$

i.e., the matrices of the respective first and second key points $\mathbf{p}_j$, $\mathbf{q}_{c(j)}$. The Matrix $\mathbf{S} = \mathbf{Q\,P^T}$ may be decomposed into its singular value matrix $\Sigma$ and two orthogonal matrices $\mathbf{U}, \mathbf{V}$ as $\mathbf{S} = \mathbf{Q\,P^T} = \mathbf{U\,\Sigma\,V^T}$. As the trace $\mathrm{Tr}\{ \mathbf{R\,Q\,P^T}\} = \mathrm{Tr}\{ \mathbf{V^T\,R\,U\,\Sigma}\}$ in Eq. (iii) contains the matrix $\mathbf{M} = \mathbf{V^T\,R\,U}$ which is also orthogonal, all its entries $m_{ij}$ have a modulus $| m_{ij} | \le 1$. Then, the trace is maximized for the case of $m_{jj} = 1$ for all diagonal elements of $\mathbf{M}$, i.e., when $\mathbf{M}$ is given by the identity matrix 1 and, thus, $\mathbf{R} = \mathbf{V\,U^T}$ with the orthogonal matrices $\mathbf{U}, \mathbf{V}$ from the singular value decomposition $\mathbf{U\,\Sigma\,V^T} = \mathbf{Q\,P^T}$ of the matrices of the respective first and second key points $\mathbf{p}_j$, $\mathbf{q}_{c(j)}$.

The invention furthermore proposes a system configured to align a plurality of SMDs, said system containing means for retrieving a plurality of SDMs, and computational means configured to align at least a first SDM with a second SDM by performing the method described above. The system according to the invention shares the advantages of the method according to the invention. The advantages stated for the method and for its further developments can be transferred analogously to the system. The system may in particular be given by or implemented in a central computation facility of a manufacturer of the two motorized vehicles, such that the system retrieves the respective SDMs that are generated by all of the manufacturer's cars that are in use, via suitable communication means, and processes them by means of corresponding CPU, RAM and further computational hardware provided by the central computation facility.

In the following, an embodiment of the invention is explained in more detail with the aid of drawings. The drawings show schematically in each case:

Fig. 1     a top view of two motorized vehicles acquiring respective SDMs of an indoor parking lot,

Fig. 2     a flow chart of a method for aligning the two SDMs acquired by the motorized vehicles of Fig. 1, and

Fig. 3     two SDMs of Fig. 1 with several landmarks determined during the alignment method according to Fig. 2.

Corresponding parts and sizes are each provided with the same reference signs in all figures.

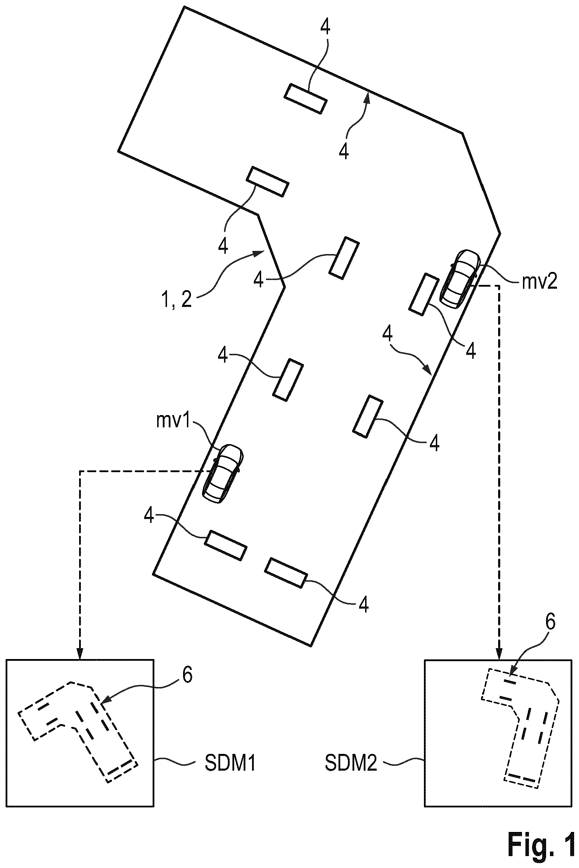

In Figure 1, a schematical top view of a bordered traffic area 1 is shown. In the present case, said bordered traffic area 1 is given by an indoor parking lot 2. The indoor parking lot 2 contains certain fixed objects 4, such as poles, walls, but also parking slots as defined by their delimitations.

A first and a second motorized vehicle mv1, mv2 are both driving through the indoor parking lot 2, possibly at different times. While driving through the indoor parking lot, the first motorized vehicle mv1, by means of its radar sensors (and possibly, its Lidar sensors), is performing a data collection on the fixed objects 4, such that the radar sensors of the first motorized vehicle mv1 (which may be a part of a DAS) generate radar data on the positions of the fixed objects 4. The data on the fixed objects 4 may be evaluated in order to identify the fixed objects 4 in the data. As these are located in the indoor parking lot 2, there is no GPS or similar absolute position data available to link a fixed objects 4 to a specific location. Thus, only odometry data might be available to allow for relative positioning information of the collected radar data.

From said radar data on the spatial distribution of delimitations of the indoor parking lot 2 (in particular, its enclosing walls) and of its (other) fixed objects 4 collected by the two motorized vehicles mv1, mv2, a first SDM (SDM1) and a second SDM (SMD2) are derived, respectively. This can be done by a processing of the collected radar data in the respective motorized vehicle mv1, mv2, generating the corresponding first/second SDM locally, i.e., by means of the onboard data processing hardware of the respective motorized vehicle mv1, mv2.

The first SDM (SDM1) is preferably given as an image map of the indoor parking lot 2 that the first motorized vehicle mv1 has been driving through, and contains data objects 6 corresponding to the fixed objects 4 of the indoor parking lot 2. The data objects 6 may contain information on the presence of a data object 6 at a specific pixel of the image (corresponding to information of the presence of a fixed object 4 at a specific grid cell of a grid covering the indoor parking lot 2). Please note that the data objects 6 of the first SDM (SDM1) do not necessarily cover all fixed objects 4 of the indoor parking lot 2 (as the first motorized vehicle mv1 possibly did not drive through the entire indoor parking lot 2), and might not correspond exactly to the data objects 6 of the second SDM (SDM2) due to detection noise etc.

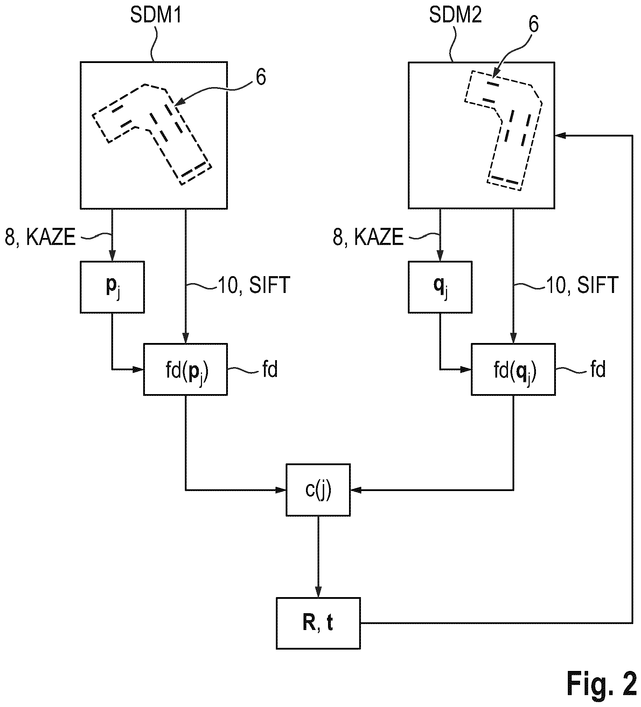

Figure 2 shows flowchart representing different steps of a method for aligning several different maps of the bordered traffic area 1 of Figure 1, and in particular, for aligning the two SDMs (SDM1 and SDM2). Now, a key point determination algorithm 8 is applied to the first SDM (SDM1) in order to determine first key points $\mathbf{p}_j$ indicative of the data objects 6 of SDM1, and applied to the second SDM (SDM2) in order to determine second key points $\mathbf{q}_j$ indicative of the data objects 6 of SDM2. In the present case, the KAZE algorithm is used as the key point determination algorithm 8.

Once the first key points $\mathbf{p}_j$ (which are somehow to be seen as "important points" of the first SDM's data objects 6, e.g., corners etc.) are determined, a feature determination algorithm 10 determining a feature descriptor fd is applied to the first SDM (SDM1) at <u>each first key point</u> $\mathbf{p}_j$, i.e., for each first key point $\mathbf{p}_j$, the feature determination algorithm 10 determines said feature descriptor fd ($\mathbf{p}_j$). The feature descriptor fd takes into account the larger morphological structure around a first (or second) key point $\mathbf{p}_j$ (or $\mathbf{q}_j$). Likewise, the feature determination algorithm 10 is applied to the second SDM (SDM2) at <u>each second key point</u> $\mathbf{q}_j$ in order to determine a feature descriptor fd for each second key point $\mathbf{q}_j$. Preferably, the feature determination algorithm 10 is different from the key point determination algorithm 8. In the present case, the SIFT algorithm is used as the feature determination algorithm 10.

From their respective feature descriptors fd, a correspondence c(j) between the first key points $\mathbf{p}_j$ and corresponding second key points $\mathbf{q}_{c(j)}$ is established, e.g., by means of the relation given above in Eq. (i) or in a similar way. This means that each first key point $\mathbf{p}_j$ of the first SDM (SDM1) is now "linked" to a corresponding second key point $\mathbf{q}_{c(j)}$ of the second SDM (SDM2) via the morphological information about their respective surroundings in their SDM (SDM1 or SDM2) as contained in their respective feature descriptors fd ($\mathbf{p}_j$), fd ($\mathbf{q}_{c(j)}$). This correspondence c(j) thus links a first key point $\mathbf{p}_j$ to that second key point $\mathbf{q}_{c(j)}$ which has the "most similar" environment in the second SDM (SDM2) in comparison with the environment of first key point $\mathbf{p}_j$ in the first SDM (SDM1).

From the correspondence c(j), a rigid transform **R, t** (with the rotation matrix **R** and the translation vector t) is derived as the transform that maximizes the number of second key points $\mathbf{q}_{c(j)}$ which are mapped onto their corresponding first key points $\mathbf{p}_j$ (or at least, into a sufficiently small ε-environment), and/or as the transform which minimizes the sum of squared errors

$$\Sigma_j \ \| \ \mathbf{R} \cdot \mathbf{q}_{c(j)} + \mathbf{t} - \mathbf{p}_j \ \|^2$$

wherein the sum runs over all key points.

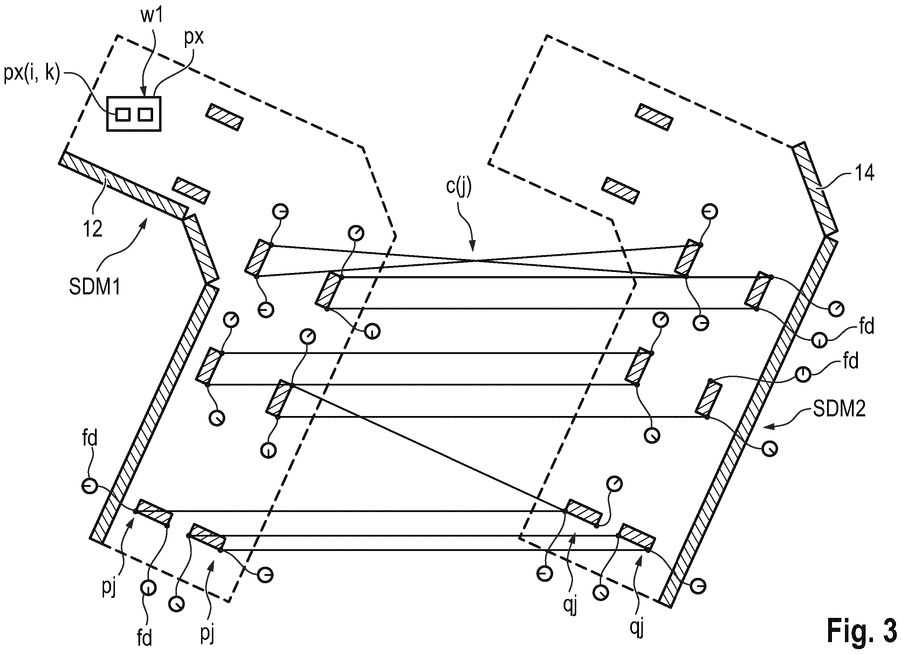

Figure 3 is showing the first SDM (SDM1, left) and the second SDM (SDM2, right) with their respective data objects 6 (i.e., assemblies of data points with possible information on the nature of the data object 6) corresponding to fixed objects 4 of the indoor parking lot 2 of Figure 1. For a better reference, the delimitations of said indoor parking lot 2 are depicted in SDM1 and SDM2 in dashed lines.

Note that in SDM1, the wall sections 12 that are included as data objects 6 of the indoor parking lot 2 are different from the wall sections 14 in SDM2. This may occur due to different trajectories of the first and second motorized vehicle mv1, mv2 when driving through the indoor parking lot 2 and collecting the radar data, thus increasing possibly the difficulty of aligning SDM1 with SDM2. Also, dynamic obstacles such as parking cars or trucks, but also (moving) persons and/or shopping cars, in the indoor parking lot 2 may lead to differing information on the fixed objects 4 in SDM1 and SDM2, as the data collection typically is performed at different times for each motorized vehicle mv1, mv2. Also, SDM1 and SDM2 shall be depicted as in the local reference frame of the respective motorized vehicle mv1, mv2, which normally causes a relative rotation (and possibly also a translation) between SDM1 and SDM2, said relative rotation (and translation) to be corrected by the rigid transform **R, t** derived according to Figure 2.

SDM1 and SDM2 are given as grid maps, and for the key point determination algorithm 8, a filter function is used to filter each SDM1 and SDM2 over a first window w1 of a first window size, said first window w1 containing pixels px surrounding a specific pixel px (i, k) to obtain a characteristic value for said specific pixel (i, k) indicative of its surroundings. The key points $\mathbf{p}_j$, $\mathbf{q}_j$ are then determined based on these characteristic values for all pixels. In a similar way, the feature determination algorithm 10 may use a different filter function over a second window (not shown in Figure 3) to filter the vicinity of a given key point $\mathbf{p}_j$, $\mathbf{q}_j$, in order to obtain another characteristic value indicative of the morphology surrounding the key point $\mathbf{p}_j$, $\mathbf{q}_j$ itself, in order to calculate the corresponding feature descriptor fd.

Figure 3 shows first key points $\mathbf{p}_j$ and second key points $\mathbf{q}_j$ of several data objects 4 of SDM1 and SDM2, respectively. To each of these key points $\mathbf{p}_j$, $\mathbf{q}_j$, a corresponding feature descriptor fd is illustrated as a circle with a notch, said notch indicating the direction of maximal image gradient of the filtered image by the feature determination algorithm 10 , and the size of the circle indicating the magnitude of said image gradient. These feature descriptors of the first and second key points $\mathbf{p}_j$, $\mathbf{q}_j$ allow for establishing a correspondence c (j) between first key points $\mathbf{p}_j$ and second key points $\mathbf{q}_{c(j)}$. Note that several second key points $\mathbf{q}_j$, are not matched "properly" in this correspondence relation c (j). However, the method is sufficiently robust to tolerate such a mismatch up to a certain degree without compromising the performance of finding the proper rigid transform **R, t.**

Although the invention has been illustrated and described in more detail by the preferred embodiment example, the invention is not limited by the disclosed examples and other variations may be derived by the skilled person without departing from the scope of protection of the invention.

**Reference Numeral**

| 1 | bordered traffic area |
|---|---|
| 2 | indoor parking lot |
| 4 | fixed objects |
| 6 | data objects |
| 8 | key point determination algorithm |
| 10 | feature determination algorithm |

| c (j) | correspondence |
|---|---|
| fd | feature descriptor |
| KAZE | KAZE algorithm |
| mv1/2 | first/second motorized vehicle |
| $\mathbf{p}_j$ | first key point |
| px | pixel |
| px (i, k) | specific pixel |
| $\mathbf{q}_j$ | second key point |
| **R, t** | rigid transform |
| SDM1/2 | first/second single drive map |
| SIFT | SIFT algorithm |
| w1 | first window |

**Claims**

1. Method for aligning a plurality of single drive maps (SDM1, SDM2),

    each single drive map (SDM1, SDM2) containing a plurality of data objects (6) associated with corresponding fixed objects (4) of a bordered traffic area (1), said data objects (6) being based on a data collection by a respective vehicle (mv1, mv2) when driving through said bordered traffic area (1),
    wherein for a first single drive map (SDM1), based on its respective data objects (6),

        - a first set of first key points ($\mathbf{p}_j$) is determined, each key point being ($\mathbf{p}_j$, $\mathbf{q}_j$) indicative of a data object (6), by means of a key point determination algorithm (8), and
        - for each first key point ($\mathbf{p}_j$), a feature descriptor (fd) indicative of the surroundings of the respective first key point ($\mathbf{p}_j$) is determined by means of a feature determination algorithm (10),

wherein for a second single drive map (SDM2), based on its respective data objects (6),

- a second set of second key points ($\mathbf{q}_j$) is determined by means of said key point determination algorithm (8), and
- for each second key point ($\mathbf{q}_j$), a feature descriptor (fd) indicative of the surroundings of the respective second key point ($\mathbf{q}_j$) is determined by means of said feature determination algorithm (10),

wherein for each of the first key points ($\mathbf{p}_j$), a corresponding second key point ($\mathbf{q}_{c(j)}$) is determined based on the respective feature descriptors (fd) of said first and second key points ($\mathbf{p}_j$, $\mathbf{q}_j$),

wherein a rigid transform **(R, t)** for mapping the second single drive map (SDM2) is derived, said rigid transform **(R, t)** being determined on the basis of said correspondence (c(j)) of the first key points ($\mathbf{p}_j$) and the respective second key points ($\mathbf{q}_{c(j)}$).

2. The method according to claim 1,
wherein said rigid transform **(R, t)** is determined such that the number of second key points ($\mathbf{q}_{c(j)}$) being mapped onto their corresponding first key ($\mathbf{p}_j$) points is maximized.

3. The method according to claim 1 or claim 2,
wherein said rigid transform **(R, t)** is determined such that a sum of Euclidean distances between the first key points ($\mathbf{p}_j$) and the corresponding transformed second key points ($\mathbf{q}_{c(j)}$) is minimized.

4. The method according to one of the preceding claims,
a parking lot is taken as said bordered traffic area (1).

5. The method according to claim 4,
wherein an indoor parking lot (2) is taken as said parking lot.

6. The method according to one of the preceding claims,

wherein at least the first single drive map (SDM1) and the second single drive map (SDM2) are given as or converted into respective first and second images corresponding to respective grid maps prior to determining the respective first and second key points ($\mathbf{p}_j$, $\mathbf{q}_j$),
wherein each image contains a multitude of pixels (px (i, k)) corresponding to respective regular grid cells representing a spatial area of the bordered traffic area (1), each pixel (px (i, k)) containing information about a presence of a fixed object (4) in the corresponding spatial area of the bordered traffic area (1).

7. The method according to claim 6,
wherein at least for a number of images, said information about a presence of a fixed object (4) in the corresponding spatial area of the bordered traffic area (1) is provided as a probability value.

8. The method according to one of the preceding claims,
wherein said key point determination algorithm (8) determines a specific pixel (px (i, k)) as a key point ($\mathbf{p}_j$, $\mathbf{q}_j$) on the basis of a first window (w1) of pixels (px) surrounding said specific pixel (px (i, k)), said first window (w1) having a predetermined first window size.

9. The method according to claim 8,
wherein said key point determination algorithm (8) determines said specific pixel (px (i, k)) as said key point ($\mathbf{p}_j$, $\mathbf{q}_j$) on the basis of a contrast and/or an intensity of the respective pixels (px) in said first window (w1) of pixels (px) surrounding said specific pixel (px (i, k)).

10. The method according to claim 8 or claim 9,
wherein a KAZE algorithm (KAZE) is used as said key point determination algorithm (8).

11. The method according to one of the preceding claims,
wherein said feature determination algorithm (10) determines said feature descriptor (fd) to a given first or second key point ($\mathbf{p}_j$, $\mathbf{q}_j$) on the basis of a second window of pixels (px) surrounding the specific pixel (px (i, k)) corresponding to said first or second key point ($\mathbf{p}_j$, $\mathbf{q}_j$), said second window having a predetermined second window size.

12. The method according to claim 11,
wherein said feature determination algorithm (10) is determines said feature descriptor (10) to said first or second key point ($\mathbf{p}_j$, $\mathbf{q}_j$) on the basis of an image gradient of the respective pixels (px (i, k)) in said second window of pixels (px) surrounding the specific pixel (px (i, k)) corresponding to said first or second key point ($\mathbf{p}_j$, $\mathbf{q}_j$).

13. The method according to claim 11 or claim 12,
wherein a SIFT algorithm (SIFT) is used as said feature determination algorithm (10).

14. The method according to any of the preceding claims,
wherein said rigid transform **(R, t)** is determined based on a singular value decomposition method, using a first matrix of the first key points ($\mathbf{p}_j$) and a second matrix of the second key points ($\mathbf{q}_j$) in said singular value decomposition method.

15. A system configured to align a plurality of single drive maps (SDM1, SDM2), said system containing means for retrieving a plurality of single drive maps (SDM1, SDM2), and computational means configured to align at least a first single drive map (SDM1) with a second single drive map (SDM2) by performing the method according to one of the preceding claims.

**Fig. 1**

**Fig. 2**

Fig. 3

| | Europäisches Patentamt European Patent Office Office européen des brevets | **EUROPEAN SEARCH REPORT** | **Application Number** EP 24 21 7388 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RAPP MATTHIAS ET AL: "A Feature-Based Approach for Group-Wise Grid Map Registration", 2015 IEEE 18TH INTERNATIONAL CONFERENCE ON INTELLIGENT TRANSPORTATION SYSTEMS, IEEE, 15 September 2015 (2015-09-15), pages 511-516, XP032804002, DOI: 10.1109/ITSC.2015.90 [retrieved on 2015-10-30] | 1-9, 11-15 | INV. G01C21/32 G01C21/00 G06T7/33 G06V10/75 G06V20/58 |
| Y | * abstract * * pages 515, 513 * * pages 512,511 * ----- | 10 | |
| Y | TAREEN SHAHARYAR AHMED KHAN ET AL: "A comparative analysis of SIFT, SURF, KAZE, AKAZE, ORB, and BRISK", 2018 INTERNATIONAL CONFERENCE ON COMPUTING, MATHEMATICS AND ENGINEERING TECHNOLOGIES (ICOMET), 1 March 2018 (2018-03-01), pages 1-10, XP055912419, DOI: 10.1109/ICOMET.2018.8346440 ISBN: 978-1-5386-1370-2 Retrieved from the Internet: URL:http://dx.doi.org/10.1109/ICOMET.2018. 8346440> * abstract * ----- | 10 | |

| | TECHNICAL FIELDS SEARCHED (IPC) |
|---|---|
| | G01C G06V G06T |

The present search report has been drawn up for all claims

| Place of search | Date of completion of the search | Examiner |
|---|---|---|
| The Hague | 8 May 2025 | de la Rosa Rivera, E |